# EUROPEAN PATENT APPLICATION

(11) **EP 2 493 257 A1**
(43) Date of publication of application: **29.08.2012**
(21) Application number: 10824460.9
(22) Date of filing: 20.10.2010
(51) Int. Cl.: H04W 72/08, H04W 48/12

(54) **METHOD, APPARATUS AND SYSTEM FOR IMPLEMENTING CARRIER AGGREGATION**

(30) Priority: 22.10.2009 CN 200910236470
(71) Applicant: China Mobile Communications Corporation, Beijing 100032 (CN)
(72) Inventor: HU, Nan, Beijing 100032 (CN); HU, Zhenping, Beijing 100032 (CN); CUI, Chunfeng, Beijing 100032 (CN)
(74) Representative: Körfer, Thomas
(86) International application number: PCT/CN2010/077900
(87) International publication number: WO 2011/047619

(57) **Abstract**

A method for implementing carrier aggregation is provided, which includes: the mobile terminal which establishes connection receives the carrier aggregation control information from a base station, and the carrier aggregation control information contains carrier identifiers and wireless resource configuration information of the target carriers for downlink work carrier aggregation; the mobile terminal confirms the target carriers according to the carrier identifiers and the wireless resource configuration information. The present invention also discloses the corresponding base station, the corresponding mobile terminal and the carrier aggregation implement system composed of the base station and the mobile terminal. The present invention enables the Time Division Duplex (TDD) terminal and the Frequency Division Duplex (FDD) terminal to aggregate the TDD carrier and the FDD carrier.

## Description

### Field of the Invention

The present invention relates to the field of radio communications and particularly to a carrier aggregation method and corresponding base station and mobile terminal and a carrier aggregation system.

### Background of the Invention

Numerous new technologies have been introduced to a subsequent enhanced version of the Long Term Evolution (LTE), also referred to as the LTE-Advanced (LTE-A), and the technology of carrier aggregation has also been introduced thereto as a key technology to support transmission with a higher bandwidth. A general principle of carrier aggregation lies in that two or more carriers are aggregated together for operation to accommodate a higher bandwidth demand. With the introduction of carrier aggregation, the number of operating carriers in a cell has been changed from one to more than one, thus resulting in a multi-carrier communication scenario. These carriers are divided into the following three categories in the 3GPP RAN1#57bis Meeting.

1. A backward compatible carrier: such a carrier is accessible for both an LTE R8 terminal and an LTE-A terminal and can also be one of aggregated carriers for the LTE-A terminal.

2. An LTE-A-specific carrier: such a carrier is inaccessible for the LTE R8 terminal but accessible for the LTE-A terminal and can also be one of aggregated carriers for the LTE-A terminal.

3. An auxiliary carrier: such a carrier is inaccessible for the LTE R8 terminal and accessible for the LTE-A terminal but under such a specific access condition that a communication connection has been established by the terminal over a backward compatible carrier or an LTE-A-specific carrier and the auxiliary carrier can be used as an additional carrier when carrier aggregation is performed for the terminal. That is, the auxiliary carrier can be used only with a terminal for which communication has been established over two or more carriers but will not be a carrier operating with a terminal for which communication has been established over only one carrier.

At present, the LTE-A is divided into two operating modes of Time Division Duplex (TDD) and Frequency Division Duplex (FDD). Correspondingly, a mobile terminal operating in the TDD mode is referred to as a TDD terminal, and a mobile terminal operating in the FDD mode is referred to as an FDD terminal. A carrier applied in the TDD operating mode is referred to as a TDD carrier, and a carrier applied in the FDD operating mode is referred to as an FDD carrier.

A mature carrier aggregation solution has been absent so far in the prior art. A solution for a TDD terminal to aggregate TDD carriers and for a FDD terminal to aggregate FDD carriers has been proposed in the field, but no specific implementation solution has been defined. Moreover, carrier aggregation crossing the different modes, i.e., FDD carrier aggregation by a TDD terminal and TDD carrier aggregation by an FDD terminal, is impossible.

### Summary of the Invention

Embodiments of the invention provide a carrier aggregation method and corresponding base station and mobile terminal and a carrier aggregation system so that both a TDD terminal and an FDD terminal can aggregate both a TDD carrier and a FDD carrier.

An embodiment of the invention provides a carrier aggregation method including:
receiving, by a connected mobile terminal, carrier aggregation control information transmitted from a base station, where the carrier aggregation control information includes a carrier identifier of a target carrier to be aggregated as a downlink operating carrier and radio resource configuration information of the target carrier; and
determining, by the mobile terminal, the target carrier according to the carrier identifier and the radio resource configuration information.

An embodiment of the invention further provides a base station including:
a carrier aggregation function unit configured to transmit carrier aggregation control information to a connected mobile terminal, where the carrier aggregation control information includes a carrier identifier of a target carrier to be aggregated as a downlink operating carrier and radio resource configuration information of the target carrier.

An embodiment of the invention further provides a mobile terminal including a connection establishing unit configured to establish a connection with a base station, wherein the mobile terminal further includes:
a receiving unit configured to receive carrier aggregation control information transmitted from the base station, where the carrier aggregation control information includes a carrier identifier of a target carrier to be aggregated as a downlink operating carrier and radio resource configuration information of the target carrier; and
a carrier aggregation unit configured to determine the target carrier according to the carrier identifier and the radio resource configuration information.

An embodiment of the invention further provides a carrier aggregation system including a base station and a mobile terminal, wherein the base station is configured to transmit carrier aggregation control information to the connected mobile terminal, where the carrier aggregation control information includes a carrier identifier of a target carrier to be aggregated as a downlink operating carrier and radio resource configuration information of the target carrier; and
the mobile terminal is configured to receive the carrier aggregation control information transmitted from the base station and determine the target carrier according to the carrier identifier and the radio resource configuration information.

With the invention, a base station transmits carrier aggregation control information to a mobile terminal (the mobile terminal may be a TDD terminal or an FDD terminal), where the carrier aggregation control information includes a carrier identifier of a target carrier to be aggregated as a downlink operating carrier and radio resource configuration information of the target carrier. The mobile terminal determines the target carrier (the target carrier may be a TDD carrier or an FDD carrier; and the target carrier bears data in its own operating mode regardless of whether it is a TDD carrier or an FDD carrier) according to the carrier identifier and the radio resource configuration information. In the foregoing method, it is neither necessary to distinguish an operating mode of the target carrier (that is, whether the target carrier is a TDD carrier or an FDD carrier) nor necessary to distinguish an operating mode of the mobile terminal (that is, whether the mobile terminal is a TDD terminal or an FDD terminal), and carrier aggregation in the same mode and different modes can be performed simply.

### Brief Description of the Drawings

Fig. 1 is a flow chart of a carrier aggregation method according to an embodiment of the invention;

Fig. 2 is a schematic structural diagram of a base station according to an embodiment of the invention; and

Fig. 3 is a schematic structural diagram of a mobile terminal according to an embodiment of the invention.

### Detailed Description of the Embodiments

An embodiment of the invention provides a carrier aggregation method so that both a TDD terminal and an FDD terminal can aggregate both a TDD carrier and a FDD carrier.

A carrier aggregation method according to an embodiment of the invention will be detailed below with reference to the drawings.

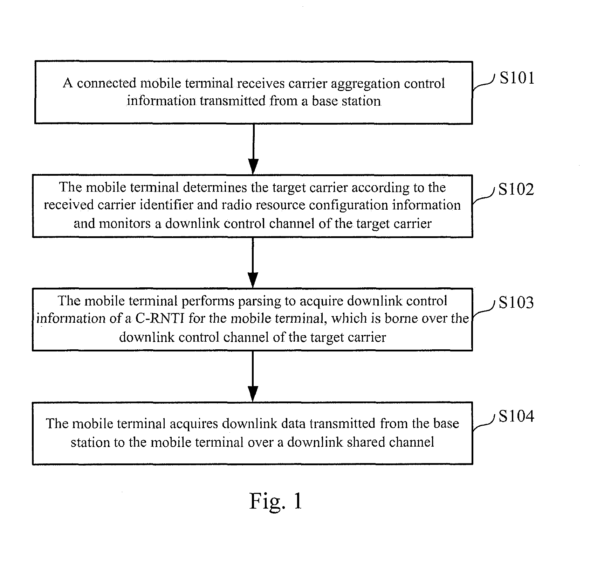

Reference is made to Fig. 1 illustrating a flow chart of a carrier aggregation method according to an embodiment of the invention, which includes the following steps.

Step S101. A connected mobile terminal receives carrier aggregation control information transmitted from a base station.
The carrier aggregation control information includes a carrier identifier of a target carrier to be aggregated as a downlink operating carrier and radio resource configuration information of the target carrier.

Step S102. The mobile terminal determines the target carrier according to the received carrier identifier and radio resource configuration information and monitors a downlink control channel of the target carrier.

Step S103. The mobile terminal performs parsing to acquire downlink control information of a Cell-Radio Network Temporary Identifier (C-RNTI) for the mobile terminal, which is borne over the downlink control channel of the target carrier.

Step S104. The mobile terminal acquires downlink data transmitted from the base station to the mobile terminal over a downlink shared channel according to the acquired downlink control information of the C-RNTI.

The foregoing steps will be detailed below.

The LTE-A mobile terminal establishes a Radio Station Controller (RRC) connection with the base station for communication before the step S101. Particularly, a TDD terminal accesses a TDD carrier for communication and an FDD terminal accesses an FDD carrier for communication. The base station (eNB) configures the mobile terminal to operate with carrier aggregation by transmitting the carrier aggregation control information to the mobile terminal to instruct the mobile terminal to have an operating carrier added through carrier aggregation, and the newly added operating carrier can be a downlink FDD carrier or a downlink TDD carrier. In the step S101, the mobile terminal receives the carrier aggregation control information transmitted from the base station, which includes the carrier identifier of the target carrier to be aggregated as a downlink operating carrier and the radio resource configuration information of the target carrier. In a specific application, the carrier identifier of the target carrier and the radio resource configuration information of the target carrier can be borne in a number of ways for transmission to the mobile terminal.

For example, when the carrier identifier of the target carrier and the radio resource configuration information of the target carrier are borne in RRC layer control signaling, corresponding control signaling defined as in an RRC control signaling format in the existing 3GPP 36.331 can include a frequency point, a bandwidth, Physical Hybrid Automatic Repeat reQuest (HARQ) Indicator Channel (PHICH) configuration, a system frame number (which may be absent if the target carrier is synchronized with a current operating carrier frame of the mobile terminal), a starting frame for monitoring (which may be absent if an appointed monitoring interval is adopted) and radio resource configuration information of the target carrier. In another example, the RRC control signaling can include the number, a starting frame for monitoring and radio resource configuration information of the target carrier. The radio resource configuration includes downlink shared channel configuration, uplink control channel configuration, uplink shared channel configuration, uplink power control, channel condition feedback report configuration, and antenna condition configuration. The foregoing description is merely exemplary, but the carrier identifier of the target carrier and the radio resource configuration information of the target carrier can alternatively be transmitted to the mobile terminal in anther signaling format, and the invention will not be limited in this respect.

Furthermore, the eNB will schedule the mobile terminal over the target carrier (a downlink FDD carrier or TDD carrier) in a specified period of time after transmitting the carrier aggregation control information to the mobile terminal. That is, a System Information-Radio Network Temporary Identifier (SI-RNTI), a Paging-Radio Network Temporary Identifier (P-RNTI), and a Cell-Radio Network Temporary Identifier (C-RNTI) for the mobile terminal are transmitted over the downlink control channel of the target carrier. The target carrier to be aggregated as a downlink operating carrier will not be changed at all but can bear corresponding data in its own operating mode and according to a scheduling instruction of the eNB. That is, when an FDD carrier is adopted for the target carrier, it is unknown to the FDD carrier to be aggregated as a downlink operating carrier whether corresponding data to be borne over the carrier is for transmission to a TDD terminal or an FDD terminal; and alike when a TDD carrier is adopted for the target carrier, it is unknown to the TDD carrier to be aggregated as a downlink operating carrier whether corresponding data to be borne over the carrier is for transmission to a TDD terminal or an FDD terminal.

The mobile terminal determines the target carrier according to the received carrier identifier and radio resource configuration information and monitors the downlink control channel of the target carrier in the step S102.

The mobile terminal can initiate monitoring in the following two ways.

One way involves an explicit indicator: the carrier aggregation control information transmitted from the base station to the mobile terminal further includes a monitoring start indicator, and the mobile terminal initiates monitoring the downlink control channel of the target carrier upon determining arrival of a monitoring start time according to the received monitoring start indicator. The monitoring start indicator can indicate a monitoring interval, that is, instruct the mobile terminal to initiate monitoring after an interval of X milliseconds from the reception of the carrier aggregation control information, or can indicate a starting frame for monitoring, that is, instruct the mobile terminal to initiate monitoring the downlink control channel of the target carrier at a corresponding time of the starting frame for monitoring.

The other way involves an implicit indicator: a monitorning interval is appointed in advance between the base station and the mobile terminal. The mobile terminal initiates monitoring the downlink control channel of the target carrier upon determining expiration of the monitoring interval appointed in advance with the base station after receiving the carrier aggregation control information transmitted from the base station.

The mobile terminal performs parsing to acquire the downlink control information of the C-RNTI for the mobile terminal, which is borne over the downlink control channel of the target carrier, in the step S103. No parsing is performed for the downlink control information of the SI-RNTI and the P-RNTI. Thus it can be ensured that the mobile terminal will use the target carrier as an auxiliary carrier.

The mobile terminal acquires the downlink data transmitted from the base station to the mobile terminal over the downlink shared channel according to the acquired downlink control information of the C-RNTI in the step S104.

In the carrier aggregation method according to the foregoing embodiment of the invention, when the radio resource configuration information of the target carrier is changed, the base station will further notify the mobile terminal of the changed radio resource configuration information so that the mobile terminal can receive data normally under a changed radio resource configuration condition. The changed radio resource configuration information of the target carrier can also be notified to the mobile terminal by being borne in RRC control signaling.

When it is necessary for the mobile terminal to exit from the target carrier, the base station will simply transmit an aggregated carrier exit indicator carrying the carrier identifier of the target carrier to the mobile terminal, and the aggregated carrier exit indicator can also be borne in RRC control signaling or otherwise for transmission to the mobile terminal. The mobile terminal stops monitoring the downlink control channel of the target carrier upon reception of the aggregated carrier exit indicator transmitted from the base station.

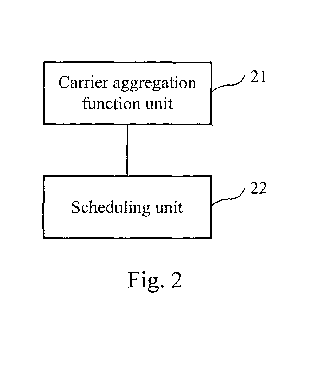

Based upon the same inventive idea, an embodiment of the invention further provides a base station with a structure as schematically illustrated in Fig. 2, which includes:
a carrier aggregation function unit 21 configured to transmit carrier aggregation control information to a mobile terminal, where the carrier aggregation control information includes a carrier identifier of a target carrier to be aggregated as a downlink operating carrier and radio resource configuration information of the target carrier.

In an embodiment, the base station further includes:
a scheduling unit 22 configured to bear downlink control information of a C-RNTI of the mobile terminal over a downlink control channel of the target carrier and bear downlink data for transmission to the mobile terminal over a downlink shared channel.

In an embodiment, the carrier aggregation function unit 21 is further configured to notify the mobile terminal of changed radio resource configuration information of the target carrier when the radio resource configuration information is changed.

In an embodiment, the carrier aggregation function unit 21 is further configured to transmit an aggregated carrier exit indicator carrying the carrier identifier of the target carrier to the mobile terminal to instruct the mobile terminal to stop monitoring the downlink control channel of the target carrier, and to transmit an aggregated carrier exit notification to the scheduling unit 22; and
the scheduling unit 22 is further configured to receive the aggregated carrier exit notification transmitted from the carrier aggregation function unit 21 and stop bearing the downlink control information of the C-RNTI of the mobile terminal over the downlink control channel of the target carrier.

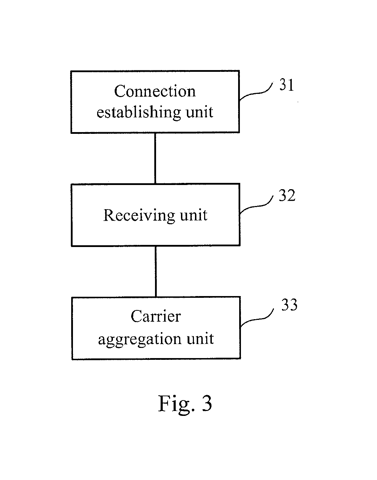

Based upon the same inventive idea, an embodiment of the invention further provides a mobile terminal with a structure as schematically illustrated in Fig. 3, which includes:
a connection establishing unit 31 configured to establish a communication connection with a base station;
a receiving unit 32 configured to receive carrier aggregation control information transmitted from the base station, where the carrier aggregation control information includes a carrier identifier of a target carrier to be aggregated as a downlink operating carrier and radio resource configuration information of the target carrier; and
a carrier aggregation unit 33 configured to determine the target carrier according to the carrier identifier and the radio resource configuration information.

In an embodiment, the carrier aggregation unit 33 is further configured to monitor a downlink control channel of the target carrier, to perform parsing to acquire downlink control information of a C-RNTI for the mobile terminal, and to acquire downlink data transmitted from the base station to the mobile terminal over a downlink shared channel according to the acquired downlink control information of the C-RNTI.

In an embodiment, the receiving unit 32 is further configured to receive and forward to the carrier aggregation unit 33 changed radio resource configuration information of the target carrier transmitted from the base station; and
the carrier aggregation unit 33 is further configured to monitor a downlink control channel of the target carrier according to the carrier identifier and the changed radio resource configuration information.

In an embodiment, the receiving unit 32 is further configured to receive and forward to the carrier aggregation unit 33 an aggregated carrier exit indicator transmitted from the base station, which carries the carrier identifier of the target carrier; and
the carrier aggregation unit 33 is further configured to stop monitoring the downlink control channel of the target carrier upon reception of the aggregated carrier exit indicator.

Based upon the same inventive idea, an embodiment of the invention further provides a carrier aggregation system including a base station and a mobile terminal.

The base station is configured to transmit carrier aggregation control information to the connected mobile terminal, where the carrier aggregation control information includes a carrier identifier of a target carrier to be aggregated as a downlink operating carrier and radio resource configuration information of the target carrier.

The mobile terminal is configured to receive the carrier aggregation control information transmitted from the base station and determine the target carrier according to the carrier identifier and the radio resource configuration information.

In an embodiment, the base station is further configured to bear downlink control information of a C-RNTI of the mobile terminal over a downlink control channel of the target carrier and bear downlink data for transmission to the mobile terminal over a downlink shared channel; and
the mobile terminal is further configured to monitor the downlink control channel of the target carrier, perform parsing to acquire the downlink control information of the C-RNTI for the mobile terminal, and acquire the downlink data transmitted from the base station to the mobile terminal over the downlink shared channel according to the acquired downlink control information of the C-RNTI.

With the invention, when a base station configures a mobile terminal to operate with carrier aggregation, the base station transmits carrier aggregation control information to a TDD terminal or an FDD terminal, which includes a carrier identifier of a target carrier to be aggregated as a downlink operating carrier and radio resource configuration information of the target carrier. And the base station bears data over the downlink TDD target carrier or FDD target carrier in its own operating mode. The mobile terminal determines the target carrier according to the received carrier identifier and radio resource configuration information. In the foregoing method, it is neither necessary to distinguish whether the target carrier is a TDD carrier or an FDD carrier nor necessary to distinguish whether the mobile terminal is a TDD terminal or an FDD terminal, but carrier aggregation both in the same mode and different modes can be performed.

It will be appreciated that one skilled in the art may make various modifications and alterations to the present invention without departing from the scope of the present invention. Accordingly, if these modifications and alterations to the present invention fall within the scope of the claims of the present invention and their equivalents, the present invention intends to include all these modifications and alterations.

## Claims

1. A carrier aggregation method, comprising:
receiving, by a connected mobile terminal, carrier aggregation control information transmitted from a base station, wherein the carrier aggregation control information comprises a carrier identifier of a target carrier to be aggregated as a downlink operating carrier and radio resource configuration information of the target carrier; and
determining, by the mobile terminal, the target carrier according to the carrier identifier and the radio resource configuration information.

2. The carrier aggregation method according to claim 1, further comprising:
monitoring a downlink control channel of the target carrier, performing parsing to acquire downlink control information of a Cell-Radio Network Temporary Identifier, C-RNTI, for the mobile terminal, and acquiring downlink data transmitted from the base station to the mobile terminal over a downlink shared channel according to the acquired downlink control information of the C-RNTI.

3. The carrier aggregation method according to claim 2, wherein monitoring the downlink control channel of the target carrier comprises:
parsing, by the mobile terminal, a monitoring start indicator comprised in the carrier aggregation control information and initiating monitoring the downlink control channel of the target carrier upon determining arrival of a monitoring start time according to the listening start indicator; or
initiating, by the mobile terminal, monitoring the downlink control channel of the target carrier upon determining expiration of a monitoring interval appointed in advance with the base station after receiving the carrier aggregation control information.

4. The carrier aggregation method according to claim 1, further comprising: notifying, by the base station, the mobile terminal of changed radio resource configuration information of the target carrier when the radio resource configuration information is changed; and
monitoring, by the mobile terminal, a downlink control channel of the target carrier according to the carrier identifier and the changed radio resource configuration information.

5. The carrier aggregation method according to claim 1, further comprising: transmitting, by the base station, an aggregated carrier exit indicator carrying the carrier identifier of the target carrier to the mobile terminal; and
stopping, by the mobile terminal, monitoring the downlink control channel of the target carrier upon reception of the aggregated carrier exit indicator.

6. The carrier aggregation method according to any one of claims 1 to 4, wherein the carrier aggregation control information is borne in Radio Resource Control, RRC, control signaling.

7. The carrier aggregation method according to claim 5, wherein the aggregated carrier exit indicator is borne in RRC control signaling.

8. A base station, comprising:
a carrier aggregation function unit configured to transmit carrier aggregation control information to a connected mobile terminal, wherein the carrier aggregation control information comprises a carrier identifier of a target carrier to be aggregated as a downlink operating carrier and radio resource configuration information of the target carrier.

9. The base station according to claim 8, further comprising:
a scheduling unit configured to bear downlink control information of a Cell-Radio Network Temporary Identifier, C-RNTI, of the mobile terminal over a downlink control channel of the target carrier and bear downlink data for transmission to the mobile terminal over a downlink shared channel.

10. The base station according to claim 8, wherein the carrier aggregation function unit is further configured to notify the mobile terminal of changed radio resource configuration information of the target carrier when the radio resource configuration information is changed.

11. The base station according to claim 9, wherein the carrier aggregation function unit is further configured to transmit an aggregated carrier exit indicator carrying the carrier identifier of the target carrier to the mobile terminal to instruct the mobile terminal to stop monitoring the downlink control channel of the target carrier, and transmit an aggregated carrier exit notification to the scheduling unit; and
the scheduling unit is further configured to receive the aggregated carrier exit notification transmitted from the carrier aggregation function unit and stop bearing the downlink control information of the C-RNTI of the mobile terminal over the downlink control channel of the target carrier.

12. A mobile terminal, comprising a connection establishing unit configured to establish a connection with a base station, wherein the mobile terminal further comprises:
a receiving unit configured to receive carrier aggregation control information transmitted from the base station, wherein the carrier aggregation control information comprises a carrier identifier of a target carrier to be aggregated as a downlink operating carrier and radio resource configuration information of the target carrier; and
a carrier aggregation unit configured to determine the target carrier according to the carrier identifier and the radio resource configuration information.

13. The mobile terminal according to claim 12, wherein the carrier aggregation unit is further configured to monitor a downlink control channel of the target carrier, perform parsing to acquire downlink control information of a Cell-Radio Network Temporary Identifier, C-RNTI, for the mobile terminal, and acquire downlink data transmitted from the base station to the mobile terminal over a downlink shared channel according to the acquired downlink control information of the C-RNTI.

14. The mobile terminal according to claim 12, wherein the receiving unit is further configure to receive and forward to the carrier aggregation unit changed radio resource configuration information of the target carrier transmitted from the base station; and
the carrier aggregation unit is further configured to monitor a downlink control channel of the target carrier according to the carrier identifier and the changed radio resource configuration information.

15. The mobile terminal according to any one of claims 12 to 14, wherein the receiving unit is further configured to receive and forward to the carrier aggregation unit an aggregated carrier exit indicator transmitted from the base station, which carries the carrier identifier of the target carrier; and
the carrier aggregation unit is further configured to stop monitoring the downlink control channel of the target carrier upon reception of the aggregated carrier exit indicator.

16. A carrier aggregation system, comprising a base station and a mobile terminal, wherein the base station is configured to transmit carrier aggregation control information to the connected mobile terminal, wherein the carrier aggregation control information comprises a carrier identifier of a target carrier to be aggregated as a downlink operating carrier and radio resource configuration information of the target carrier; and
the mobile terminal is configured to receive the carrier aggregation control information transmitted from the base station and determine the target carrier according to the carrier identifier and the radio resource configuration information.

17. The system according to claim 16, wherein the base station is further configured to bear downlink control information of a Cell-Radio Network Temporary Identifier, C-RNTI, of the mobile terminal over a downlink control channel of the target carrier and bear downlink data for transmission to the mobile terminal over a downlink shared channel; and
the mobile terminal is further configured to monitor the downlink control channel of the target carrier, perform parsing to acquire the downlink control information of the C-RNTI for the mobile terminal, and acquire the downlink data transmitted from the base station to the mobile terminal over the downlink shared channel according to the acquired downlink control information of the C-RNTI.
